(19) **Europäisches Patentamt / European Patent Office / Office européen des brevets**

(11) **EP 1 999 826 B1**

(12) **FASCICULE DE BREVET EUROPEEN**

(45) Date de publication et mention
de la délivrance du brevet:
**10.02.2010 Bulletin 2010/06**

(21) Numéro de dépôt: **07727051.0**

(22) Date de dépôt: **19.03.2007**

(51) Int Cl.:
***H01S 3/042*** *(2006.01)*

(86) Numéro de dépôt international:
**PCT/EP2007/052573**

(87) Numéro de publication internationale:
**WO 2007/110342 (04.10.2007 Gazette 2007/40)**

(54) **DISPOSITIF D'AMPLIFICATION LASER A REFROIDISSEMENT CRYOGENIQUE**

LASERVERSTÄRKUNGSVORRICHTUNG MIT TIEFTEMPERATURKÜHLUNG

LASER AMPLIFICATION DEVICE WITH CRYOGENIC COOLING

(84) Etats contractants désignés:
**DE GB**

(30) Priorité: **24.03.2006 FR 0602589**

(43) Date de publication de la demande:
**10.12.2008 Bulletin 2008/50**

(73) Titulaire: **Thales**
**92200 Neuilly Sur Seine (FR)**

(72) Inventeur: **MARQUIS, Emmanuel**
**F-78830 Bullion (FR)**

(74) Mandataire: **Henriot, Marie-Pierre et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A2-2006/031254     US-A1- 2005 220 429**
**US-A1- 2006 039 425**

- **WEBER R ET AL: "Cooling Schemes for Longitudinally Diode Laser-Pumped Nd:YAG Rods" IEEE JOURNAL OF QUANTUM ELECTRONICS, IEEE SERVICE CENTER, PISCATAWAY, NJ, US, vol. 34, no. 6, juin 1998 (1998-06), XP011051943 ISSN: 0018-9197**

**Description**

Le domaine de l'invention est celui des amplificateurs de faisceau laser à haute énergie et des dispositifs de pompage optique associés.

La montée en énergie et en puissance moyenne des lasers pulsés à haute puissance crête, de type Saphir dopé au Titane conduit à l'utilisation de cristaux amplificateurs de grand diamètre nécessitant des énergies de pompage optique pouvant dépasser 100 joules par tir laser pour les lasers basse cadence et plusieurs dizaines de watts moyens en haute cadence. Les puissances crête de ces lasers sont généralement comprises entre le térawatt et le pétawatt.

Cette montée en énergie entraîne une augmentation sensible des puissances moyennes des lasers de pompe qui a pour conséquence des effets thermiques importants sur les milieux amplificateurs.

D'une part, les variations d'indice optique dues aux effets thermiques perturbent la propagation du faisceau laser amplifié, le milieu amplificateur se comportant alors comme une lentille de forme complexe. On rappelle quelques notions concernant la focale thermique après avoir rappelé le principe de fonctionnement d'un dispositif d'amplification laser.

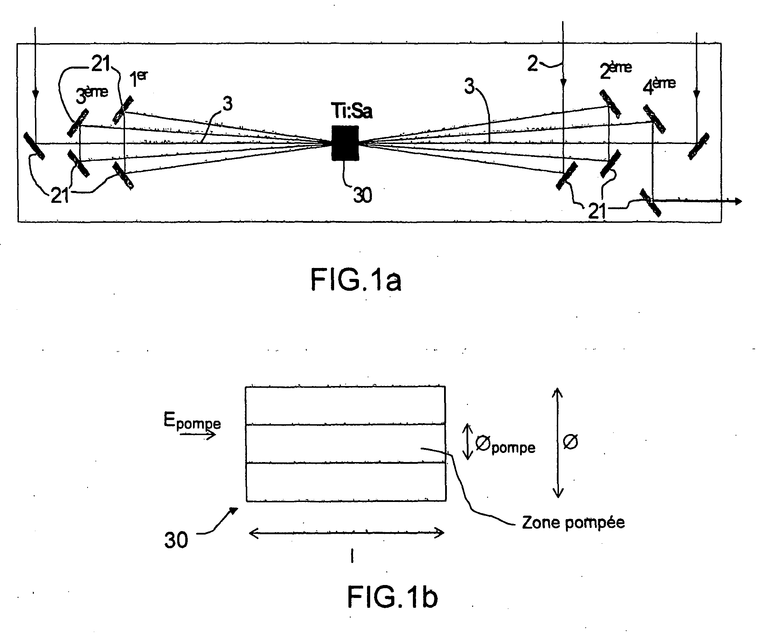

Le principe général de fonctionnement d'un dispositif d'amplification de faisceau laser est illustré en figure 1a. Il comprend principalement un cristal amplificateur de faisceau laser 30 et des faisceaux laser de pompage optique 3. Les faisceaux 3 injectent dans le cristal 30 de l'amplificateur l'énergie optique. La source laser à l'origine des faisceaux de pompage n'est pas représentée sur la figure. Le faisceau laser 2 traverse le cristal de l'amplificateur plusieurs fois au moyen de dispositifs optiques à miroirs 21. A chaque passage, il est amplifié dans le cristal. Généralement, le nombre de passage est compris entre 2 et 4. On améliore ainsi l'extraction de l'énergie apportée par les faisceaux de pompe 3.

On considère en relation avec la figure 1b, un cristal 30 ayant la forme d'un barreau amplificateur cylindrique de diamètre $\varnothing$ pompé sur un diamètre $\varnothing$pump et sur une longueur 1 par les 2 faces par un laser de pompe d'énergie $E_{pump}$.

L'énergie stockée disponible pour le gain laser sur la distance 1 s'écrit:

$$E_{STO} = E_{PUMP}\,\alpha.l.\frac{\lambda_{pump}}{\lambda_{laser}}$$

$E_{pump}$ étant l'énergie apportée par le laser de pompe, $\alpha$ étant le coefficient linéique d'absorption de l'énergie de pompe, $\lambda_{PUMP}$ et $\lambda_{LASER}$ les longueurs d'onde du faisceau laser de pompe et du faisceau laser amplifié. Le rapport de ces longueurs d'onde correspond au rendement quantique ou rendement de conversion du cristal amplificateur.

Par exemple, pour un cristal en Saphir dopé au Titane dont le faisceau de pompe est à une longueur d'onde $\lambda_{PUMP}$ de 532 nanomètres et dont le faisceau laser amplifié est à une longueur d'onde $\lambda_{LASER}$ de 800 nanomètres, le rendement quantique vaut 0.665.

On rappelle également que l'énergie stockée $E_{STO}$ ne l'est pas uniformément le long du cristal. La variation d'énergie absorbée $E_{ABS}(x)$ le long du cristal dans la direction Ox vaut :

$$E_{abs}(l) = E_{pump}\left(1 - e^{-\alpha l}\right)$$

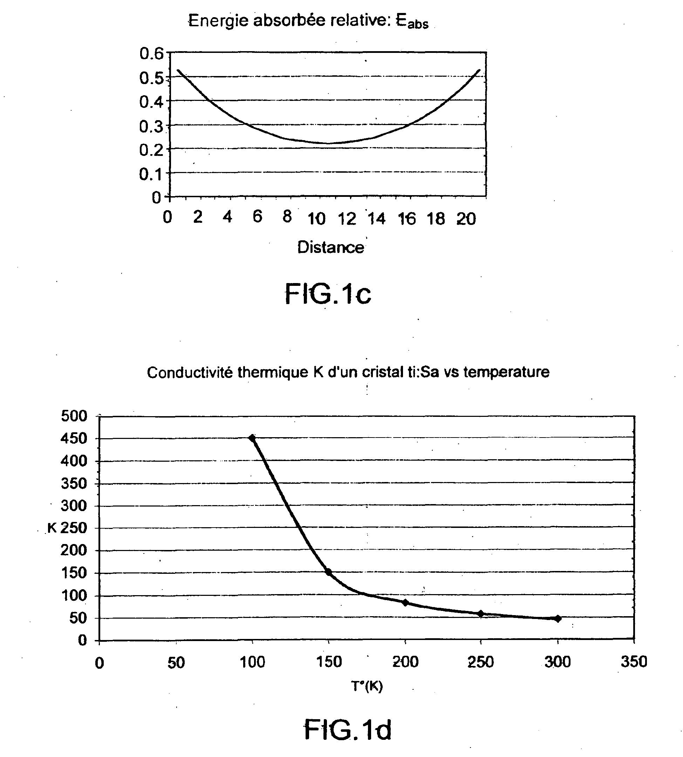

Un exemple de courbe est représenté figure 1c.

On considère $J_{STO}$, la fluence stockée disponible pour le gain d'amplification ; on a pour une surface pompée S (S= $\pi\varnothing_{pump}^2/4$):

$$J_{sto} = E_{sto}/S$$

$$J_{STO} = \frac{E_{pump}}{S}\,\frac{\alpha l}{}\,\frac{\lambda_{pump}}{\lambda_{Laser}}$$

On a alors :

$$go = \frac{J_{STO}}{l.J_{SAT}} = \frac{E_{STO}}{l.J_{SAT}\frac{\pi}{4}\left(\phi_{pump}\right)^2}$$

$g_o$ étant le gain linéique du cristal amplificateur.

L'énergie de sortie $E_{OUT}$ du faisceau laser en sortie de l'amplificateur est donnée par l'équation de Frantz et Nodvik. Elle vaut :

$$E_{OUT} = J_{SAT}.S.\ln\left[\frac{J_{STO}}{J_{SAT}}\left(e^{\frac{E_{IN}}{S.J_{SAT}}}-1\right)+1\right]$$

avec :

E_IN : Energie d'entrée avant amplification ;
$J_{STO}$ : Fluence stockée disponible pour le gain d'amplification ;
$J_{SAT}$ : Fluence de saturation ;
S : Surface du faisceau laser.

On a également :

$J_{IN}$ : Fluence d'entrée avant amplification avec

$$J_{IN} = \frac{E_{IN}}{S} \; ;$$

L'énergie stockée $E_{sto}$ et le rendement de conversion $\lambda_{PUMP}/\lambda_{LASER}$ induisent un dépôt thermique important dans la zone pompée. Ce dépôt génère une variation de température T à l'intérieur du cristal selon un axe y perpendiculaire à l'axe de symétrie du cristal. Typiquement, les variations de température sont d'une dizaine de degrés avec des cristaux dont le diamètre est de quelques centimètres. Ce profil crée alors une lentille thermique pure dont la focale $f_{th}$ s'exprime selon la formule classique :

$$fth = \frac{2\pi.r^2.K}{P_T\left[\frac{dn}{dT}\right]}$$

avec r le rayon du faisceau de pompe,
K la conductivité thermique du cristal,
dn/dT, le gradient d'indice du matériau en fonction de la température.

La puissance thermique $P_T$ déposée dans le cristal, dépend de l'énergie stockée et du rendement de conversion.

Typiquement, les lentilles thermiques ont des focales de quelques dizaines de centimètres à quelques dizaines de mètres.

Ces effets sont d'autant plus sensibles que le faisceau amplifié traverse le milieu amplificateur plusieurs fois, se dégradant ainsi à chaque passage.

D'autre part, les dilatations engendrées par ce dépôt thermique induisent des contraintes mécaniques sur le milieu amplificateur. Enfin, l'effet laser transverse qui se produit spontanément lorsque les niveaux d'énergie sont suffisants est renforcé. Or, cet effet diminue considérablement le gain $g_o$ de l'amplificateur.

Une solution connue pour lutter contre ces problèmes de gestion thermique consiste à utiliser un refroidissement cryogénique du cristal de l'amplificateur qui permet d'évacuer les calories accumulées pendant le fonctionnement et de diminuer les contraintes mécaniques dues à ces calories. Mais ce refroidissement ne diminue pas la puissance thermique déposée $P_T$ qui intervient dans le calcul de la focale thermique. Par contre, dans le cas d'un cristal à base de saphir dopé au titane, ce matériau présente un coefficient K de conductivité thermique qui augmente lorsque la température diminue ; cette propriété est mise en évidence par la courbe de conductivité de la figure 1d. Il en résulte qu'un système de refroidissement cryogénique permet aussi de s'affranchir de la focale thermique parasite.

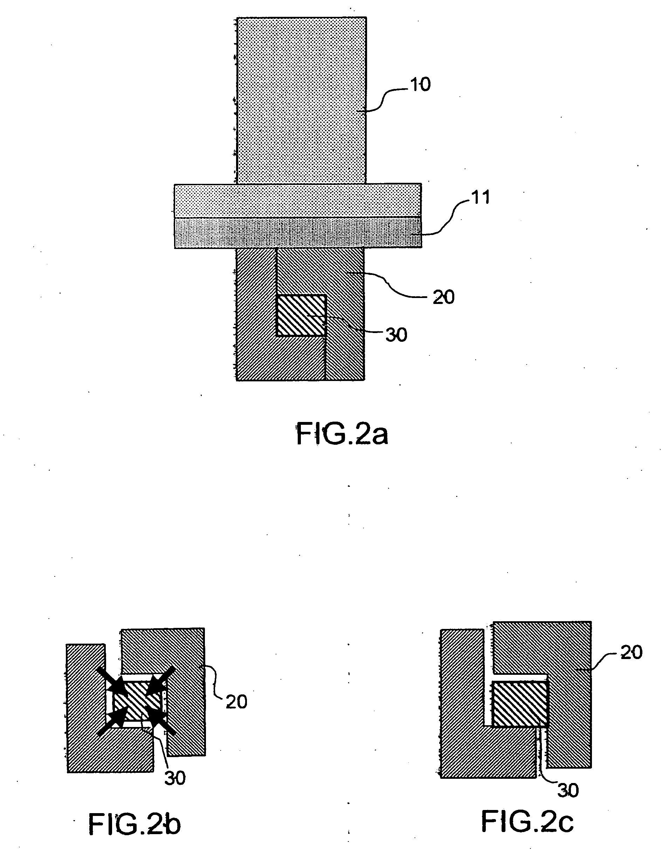

Un dispositif connu dont un exemple est représenté figure 2a consiste à utiliser un cristal 30 de la forme d'un barreau rectangulaire, refroidi par conduction par un montage direct sur le cristal. Il comprend une tête cryogénique 10 couplée au cristal 30 par l'intermédiaire d'une interface 11. Fixée à cette interface, une coquille 20 en cuivre composée de deux mâchoires maintient le cristal en position ; elle est utilisée avec un joint de type indium par exemple qui assure le contact thermique entre le cristal 30 et la pièce de maintien 20 en cuivre. Ce dispositif présente les inconvénients suivants illustrés sur les figures 2b et 2c :

le cristal rectangulaire présente un stress thermique induit par l'absence de symétrie de révolution, illustré parles flèches,
la pièce de maintien est hyper-statique et génère un astigmatisme sur le faisceau amplifié,
un compromis doit être recherché entre le serrage du cristal et le stress résiduel car si le serrage est insuffisant, le contact thermique se dégrade et les cycles chaud/froid de marche/arrêt font travailleur la pièce de maintien du cristal ; un effet de déplacement du cristal dans sa pièce de maintien peut se produire comme illustré figure 2c.

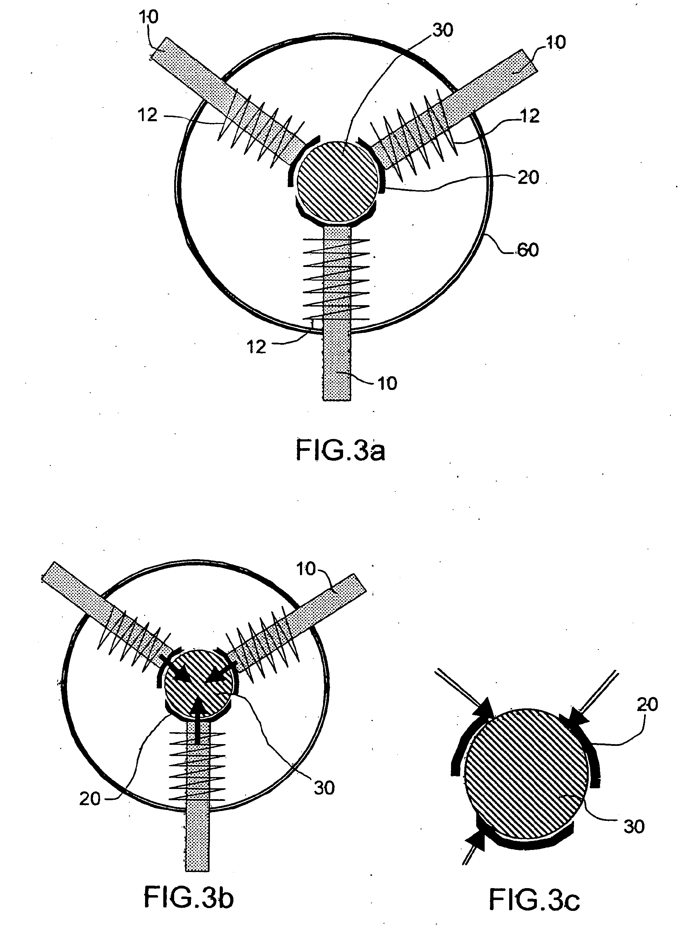

Un autre dispositif décrit en relation avec la figure 3a, est basé sur un montage en pression. Trois têtes cryogéniques 10 sont maintenues en pression sur les faces du cristal 30 par des ressorts 12 couplés à des pièces de maintien 20 qui jouent le rôle d'interface thermique entre la tête de cristal et la tête cryogénique. L'utilisation d'un cristal rond permet d'optimiser les coûts et d'éviter le stress intrinsèque à la forme rectangulaire. Néanmoins, on note les inconvénients suivants.

Le système de pression qui comprend les ressorts génère un stress mécanique sur le cristal illustré figure 3b qui, couplé à la biréfringence naturelle du cristal, est un facteur d'aberration sur le faisceau optique ; 3 têtes génèrent une aberration tri-foil.

La dilatation différentielle entre le cristal rond et les pièces de contact induit un stress mécanique supplémentaire illustré figure 3c par les flèches, qui peut aussi dégrader le contact thermique.

Ce dispositif peut également être utilisé avec un cristal rectangulaire. Mais ce type de configuration mène aussi à un stress thermomécanique considérable sur le cristal optique.

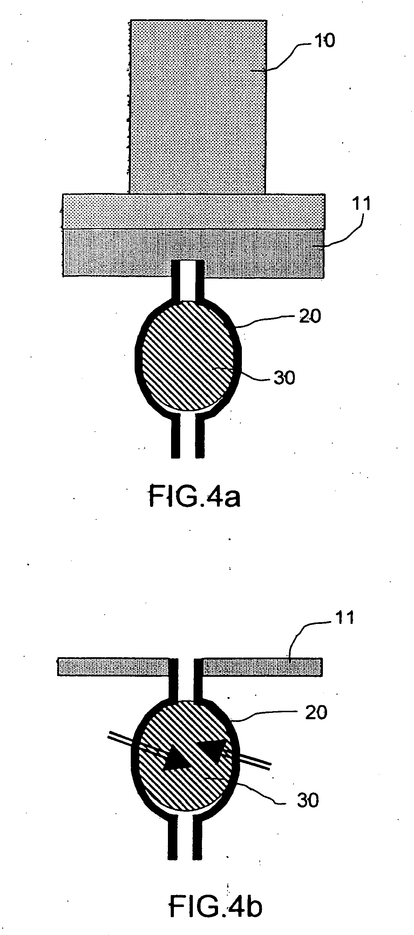

Un autre dispositif décrit en relation avec la figures 4a, est basé sur un montage à lames. Les pièces de maintien 20 sont des lames mécaniques déformables ou cuillères, qui viennent enserrer un cristal 30 rond et jouent le rôle d'interface thermique entre la tête de cristal et la tête cryogénique. Ce dispositif plus évolué que les deux précédents systèmes, est lui aussi exposé aux mêmes défauts.

Une pression de serrage importante est nécessaire pour assurer un bon contact thermique entre les lames et le cristal. La dilation différentielle lors de la descente en température induit un stress mécanique sur le cristal illustré figure 4b par les flèches, qui va se traduire par des aberrations sur le faisceau optique. Pour échapper à ces aberrations, le cristal qui présente une section de 10 à 15 mm par exemple n'est utilisé au centre que sur une section inférieure à 1 à 2 mm car les aberrations apparaissent au-delà. On obtient alors une zone optiquement utile de faible dimension.

Il est donc nécessaire de maîtriser ces effets parasites pour obtenir un fonctionnement correct de la chaîne laser.

Un dispositif selon le préambule de la revendication 1 est connu de WO-A-2006/031254.

Le but de l'invention est d'obtenir un amplificateur laser à refroidissement cryogénique qui n'induise pas de stress mécanique sur le cristal.

L'invention est basée sur une combinaison de la technologie du refroidissement cryogénique et du principe de refroidissement liquide.

Plus précisément, l'invention a pour objet un dispositif d'amplification de faisceau laser comprenant au moins un cristal amplificateur, une tête de refroidissement cryogénique du cristal et une pièce mécanique de maintien du cristal disposée entre la tête et le cristal amplificateur. Il est principalement caractérisé en ce qu'il comprend une interface thermomécanique entre le cristal et la pièce de maintien, assurée par un film liquide cryogénique immergeant partiellement le cristal, et un vase d'expansion du liquide relié à cette interface.

Ainsi l'interface solide-solide de l'art antérieur est remplacée par une interface solide-liquide-solide.

De préférence, il comprend en outre des joints d'étanchéité disposés entre le cristal et la pièce de maintien de manière à ce que le liquide de l'interface et du vase d'expansion soit enfermé dans une enceinte fermée délimitée par le cristal, la pièce de maintien et les joints d'étanchéité.

Selon une caractéristique de l'invention, le cristal présentant une température de fonctionnement Tc déterminée, le liquide présente une température de solidification Tsl inférieure à Tc.

Selon une autre caractéristique de l'invention, le cristal a la forme d'un cylindre droit comprenant une face d'entrée et une face de sortie par exemple de forme circulaire et une surface cylindrique reliant lesdites faces, le faisceau laser amplifié circulant entre lesdites faces et en ce que l'interface thermomécanique est au contact de ladite surface cylindrique, de préférence au contact d'au moins l'intégralité de la surface cylindrique.

Le liquide d'interface est par exemple de l'huile paraffinée ou comprend de l'isopenthane.

Le liquide d'interface forme un film d'épaisseur comprise par exemple entre 200 et 500 $\mu$m.

Le liquide d'interface peut être statique ou circulant.

Avantageusement, le cristal est à base de Titane et de Saphir.

L'invention a aussi pour objet un système d'amplification de faisceau laser comprenant un dispositif d'amplification tel que décrit placé dans une enceinte à vide qui comporte des hublots d'entrée et de sortie du faisceau laser.

L'invention sera mieux comprise et d'autres avantages apparaîtront à la lecture de la description qui va suivre donnée à titre non limitatif et grâce aux figures annexées parmi lesquelles :

la figure 1a déjà décrite représente le schéma de principe d'un dispositif d'amplification laser ;

la figure 1b représente schématiquement le cristal de l'amplificateur ;

la figure 1c présente un exemple de la variation de l'énergie absorbée relative Eabs en fonction de la distance 1 le long du cristal ;

la figure 1d présente un exemple de variation de la conductivité thermique K en fonction de la température d'un cristal Ti :Sa,

les figures 2 déjà décrites représentent schématiquement un exemple d'un premier dispositif d'amplification laser à refroidissement cryogénique connu, et illustrent ses inconvénients,

les figures 3 déjà décrites représentent schématiquement un exemple d'un deuxième dispositif d'amplification laser à refroidissement cryogénique connu, et illustrent ses inconvénients,

les figures 4 déjà décrites représentent schématiquement un exemple d'un troisième dispositif d'amplification laser à refroidissement cryogénique connu, et illustrent ses inconvénients,

la figure 5a représente schématiquement un dispositif d'amplification laser selon l'invention vu en coupe dans un plan perpendiculaire à l'axe optique,

la figure 5b représente schématiquement le dispositif d'amplification de la figure 5a vu de côté parallèlement à l'axe optique,

la figure 5c représente schématiquement un système d'amplification selon l'invention.

D'une figure à l'autre les mêmes éléments sont repérés par les mêmes références.

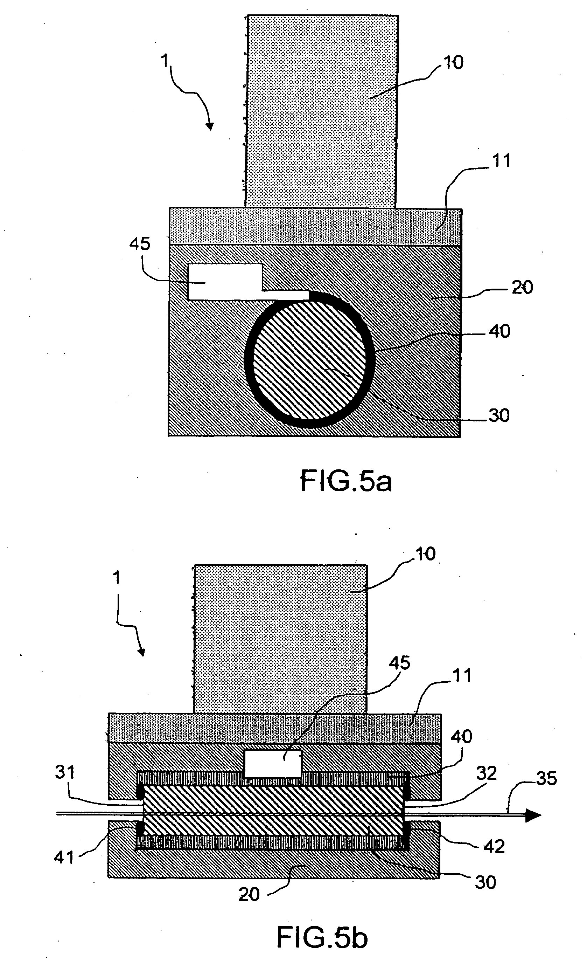

Le dispositif selon l'invention décrit en relation avec les figures 5a et 5b comprend :

une tête cryogénique 10 telle qu'un doigt cryogénique,

une interface 11 par exemple en cuivre,

un cristal 30 de préférence de type Saphir dopé au Titane,

une pièce mécanique 20 maintenant le cristal immergé dans un liquide 40 particulier qui fait interface thermique entre la tête cryogénique et le cristal,

un réservoir ou vase d'expansion 45, permettant de maintenir le cristal en partie immergé, même lors des cycles de température avec contraction/dilatation de l'interface 40.

De préférence, le cristal a la forme d'un cylindre droit comprenant une face d'entrée et une face de sortie de forme circulaire et une surface cylindrique reliant lesdites faces, le faisceau laser amplifié circulant entre lesdites faces. Avantageusement, l'interface thermomécanique 40 est au contact au moins de l'intégralité de ladite surface cylindrique; cela permet notamment de réduire l'effet laser transverse qui est favorisé aux extrémités du cristal. Il est donc préférable que les extrémités du cristal baignent dans le liquide de refroidissement même si c'est au détriment de l'utilisation de toute la section du cristal. Selon une variante, l'interface thermomécanique 40 est au contact d'une partie seulement de cette surface cylindrique de manière à ce que toute la section du cristal soit utilisée, au détriment cette fois du refroidissement du cristal.

Des joints 41, 42 représentés figure 5b qui assurent l'étanchéité du liquide, sont placés sur les faces d'entrée 31 et de sortie 32 du cristal, de sorte que les contraintes de pression exercées sur eux par le cristal soient disposées parallèlement à l'axe du cristal.

L'invention présente les avantages suivants :

le cristal est à symétrie de révolution, ce qui supprime les aberrations non circulaires et il ne reste donc que des effets de lentille pure,

le contact thermique est assuré par le liquide, évitant ainsi l'inconvénient du refroidissement par une interface solide-solide,

il n'y a pas nécessité à exercer une force sur l'interface thermique pour assurer l'échange thermique,

le système absorbe les dilatations différentielles grâce au liquide d'interface,

la lentille thermique est supprimée par un fonctionnement à très basse température. En effet, la focale thermique augmente avec la conductivité thermique K et celle-ci est d'autant plus forte que la température est très baisse comme indiqué figure 1d.

Le liquide d'interface peut être une huile paraffinée, de l'isopenthane ou toute autre dérivé dont la température de solidification est proche du point de fonctionnement du système. Le cristal présentant une température de fonctionnement Tc déterminée, le liquide présente une température de solidification Tsl inférieure à Tc. Avec de l'huile paraffinée, on peut faire fonctionner le cristal à -150°C, réduisant ainsi fortement les effets de focale thermique. Le liquide d'interface forme un film mince d'huile typiquement compris entre 200 um et 500 um d'épaisseur, qui assure un mouillage des surfaces du cristal 30 et de la pièce de maintien 20 tout en minimisant sa résistance thermique intrinsèque.

Le liquide d'interface est statique. Il est dans une enceinte fermée délimitée par le cristal, la pièce de maintien et les joints d'étanchéité. Eventuellement, cette enceinte est reliée à une pompe pour le faire circuler.

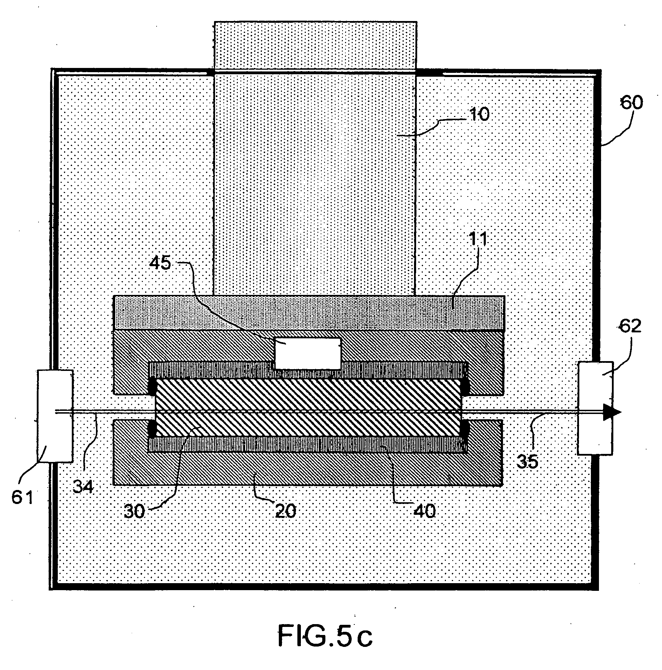

Le dispositif d'amplification 1 est placé dans une enceinte à vide 60 comme illustré figure 5c. La tête cryogénique 10 est reliée à l'extérieur de cette enceinte de manière à assurer son fonctionnement cryogénique. A cet effet une partie de la tête cryogénique 11 dépasse de l'enceinte 60. Les interfaces d'entrée 61 et de sortie 62 des faisceaux sont des hublots assurant l'étanchéité. Seuls les faisceaux laser à amplifier 34 et amplifié. 35 sont représentés ; les faisceaux de pompe ne le sont pas. L'utilisation du vide permet d'éviter les effets de condensation lorsque l'ensemble est refroidi aux températures cryogéniques.

## Revendications

1. Dispositif d'amplification (1) de faisceau laser comprenant au moins un cristal amplificateur (30), une tête de refroidissement cryogénique (10) du cristal et une pièce de maintien (20) du cristal disposée entre la tête et le cristal amplificateur, **caractérisé en ce qu'**il comprend une interface thermomécanique entre le cristal et la pièce de maintien, assurée par un film liquide cryogénique (40) immergeant partiellement le cristal, et un vase d'expansion (45) du liquide relié à cette interface.

2. Dispositif selon la revendication précédente, **caractérisé en ce qu'**il comprend en outre des joints d'étanchéité (41, 42) disposés entre le cristal et la pièce de maintien de manière à ce que le liquide de l'interface et du vase d'expansion soit enfermé dans une enceinte fermée délimitée par le cristal, la pièce de maintien et les joints d'étanchéité.

3. Dispositif selon l'une quelconque des revendications précédentes, **caractérisé en ce que** le cristal (30) présentant une température de fonctionnement Tc déterminée, le liquide présente une température de solidification Tsl inférieure à Tc.

4. Dispositif selon l'une quelconque des revendications précédentes, **caractérisé en ce que** le cristal (30) a la forme d'un cylindre droit comprenant une face d'entrée (31) et une face de sortie (32) et une surface cylindrique reliant lesdites faces, le faisceau laser amplifié circulant entre lesdites faces et **en ce que** le liquide d'interface thermomécanique est au contact de ladite surface cylindrique

5. Dispositif selon la revendication précédente, **caractérisé en ce que** le liquide est au contact d'au moins l'intégralité de la surface cylindrique.

6. Dispositif selon l'une quelconque des revendications 4 ou 5, **caractérisé en ce que** les faces d'entrée 31 et de sortie 32 du cristal sont de forme circulaire.

7. Dispositif selon l'une quelconque des revendications précédentes, **caractérisé en ce que** le liquide d'interface est de l'huile paraffinée ou comprend de l'isopenthane.

8. Dispositif selon l'une quelconque des revendications précédentes, **caractérisé en ce que** le liquide d'interface forme un film d'épaisseur comprise entre 200 et 500 $\mu$m.

9. Dispositif selon l'une quelconque des revendications précédentes, **caractérisé en ce que** le liquide est statique ou circulant.

10. Dispositif selon l'une quelconque des revendications précédentes, **caractérisé en ce que** le cristal est à base de Titane et de Saphir.

11. Système d'amplification de faisceau laser comprenant un dispositif d'amplification (1) selon l'une des revendications précédentes placé dans une enceinte à vide (60) qui comporte des hublots d'entrée (61) et de sortie (62) du faisceau laser.

**Claims**

1. Laser amplifier (1) comprising at least one amplifying crystal (30), a cryogenic cooling head (10) for cooling the crystal and a keeper (20) for keeping the crystal in position, placed between the head and the amplifying crystal, **characterized in that** it includes, between the crystal and the keeper, a thermomechanical interface provided by a cryogenic liquid film (40) partially immersing the crystal and, connected to this interface, an expansion vessel (45) for the liquid.

2. Amplifier according to the preceding claim, **characterized in that** it further includes seals (41, 42) placed between the crystal and the keeper so that the liquid of the interface and of the expansion vessel is contained in an enclosure bounded by the crystal, the keeper and the seals.

3. Amplifier according to either of the preceding claims, **characterized in that**, if the crystal (30) has a specified operating temperature $T_c$, the liquid has a solidification temperature $T_s$ below $T_c$.

4. Amplifier according to any one of the preceding claims, **characterized in that** the crystal (30) has the form of a right cylinder comprising an entry face (31), an exit face (32) and a cylindrical surface connecting said faces, the amplified laser beam travelling between said faces, and **in that** the thermomechanical interface liquid is in contact with said cylindrical surface.

5. Amplifier according to the preceding claim, **characterized in that** the liquid is in contact with at least the entirety of the cylindrical surface.

6. Amplifier according to either of Claims 4 and 5, **characterized in that** the entry face 31 and exit face 32 of the crystal are of circular shape.

7. Amplifier according to any one of the preceding claims, **characterized in that** the interfacial liquid is a paraffin oil or comprises isopentane.

8. Amplifier according to any one of the preceding claims, **characterized in that** the interfacial liquid forms a film with a thickness of between 200 and 500 $\mu$m.

9. Amplifier according to any one of the preceding claims, **characterized in that** the liquid is static or circulating.

10. Amplifier according to any one of the preceding claims, **characterized in that** the crystal is based on titanium and sapphire.

11. Laser amplification system comprising an amplifier (1) according to one of the preceding claims, placed in a vacuum enclosure (60) that includes an entry window (61) and an exit window (62) for the laser beam.

**Patentansprüche**

1. Vorrichtung (1) zur Verstärkung eines Laserstrahlenbündels mit wenigstens einem Kristallverstärker (30), einem Kryo-Kühlungskopf (10) für den Kristall und einem Teil (20) zum Halten des Kristalls, das zwischen dem Kopf und dem Kristallverstärker angeordnet ist, **dadurch gekennzeichnet, dass** sie eine thermomechanische Grenzfläche zwischen dem Kristall und dem Halteteil, die durch einen Kryo-Flüssigkeitsfilm (40) sichergestellt ist, in den der Kristall teilweise eingetaucht ist, und ein Expansionsgefäß (45) für die Flüssigkeit, das mit dieser Grenzfläche verbunden ist, aufweist.

2. Vorrichtung nach dem vorhergehenden Anspruch, **dadurch gekennzeichnet, dass** sie außerdem Dichtungen (41, 42) aufweist, die zwischen dem Kristall und dem Halteteil in der Weise angeordnet sind, dass die Flüssigkeit der Grenzfläche und des Expansionsgefäßes in einen geschlossenen Behälter eingeschlossen ist, der durch den Kristall, das Halteteil und die Dichtungen begrenzt ist.

3. Vorrichtung nach einem der vorhergehenden Ansprüche, **dadurch gekennzeichnet, dass** dann, wenn der Kristall (30) eine bestimmte Betriebstemperatur (Tc) besitzt, die Flüssigkeit eine Verfestigungstemperatur (Tsl) unterhalb von Tc besitzt.

4. Vorrichtung nach einem der vorhergehenden Ansprüche, **dadurch gekennzeichnet, dass** der Kristall (30) die Form eines geraden Zylinders hat, der eine Eintrittsfläche (31) und eine Austrittsfläche (32) sowie eine zylindrische Fläche, die diese Flächen verbindet, aufweist, wobei das verstärkte Laserstrahlenbündel zwischen diesen Flächen hin und her läuft, und dass die Flüssigkeit der thermomechanischen Grenzfläche mit der zylindrischen Oberfläche in Kontakt ist.

5. Vorrichtung nach dem vorhergehenden Anspruch, **dadurch gekennzeichnet, dass** die Flüssigkeit zumindest mit der gesamten zylindrischen Oberfläche in Kontakt ist.

6. Vorrichtung nach einem der Ansprüche 4 oder 5, **dadurch gekennzeichnet, dass** die Eintrittsfläche 31 und die Austrittsfläche 32 des Kristalls kreisförmig sind.

7. Vorrichtung nach einem der vorhergehenden Ansprüche, **dadurch gekennzeichnet, dass** die Grenzflächenflüssigkeit paraffiniertes Öl ist oder Isopentan enthält.

8. Vorrichtung nach einem der vorhergehenden Ansprüche, **dadurch gekennzeichnet, dass** die Grenzflächenflüssigkeit einen Film mit einer Dicke im Bereich von 200 bis 500 $\mu$m bildet.

9. Vorrichtung nach einem der vorhergehenden Ansprüche, **dadurch gekennzeichnet, dass** die Flüssigkeit statisch ist oder zirkuliert.

10. Vorrichtung nach einem der vorhergehenden Ansprüche, **dadurch gekennzeichnet, dass** der Kristall ein Kristall auf Basis von Titan und Saphir ist.

11. System zum Verstärken eines Laserstrahlenbündels, das eine Verstärkungsvorrichtung (1) nach einem der vorhergehenden Ansprüche aufweist, die in einem Vakuumbehälter (60) angeordnet ist, der eine Eintrittsluke (61) und eine Austrittsluke (62) für das Laserstrahlenbündel aufweist.

FIG.1a

FIG.1b

EP 1 999 826 B1

Energie absorbée relative: $E_{abs}$

FIG.1c

Conductivité thermique K d'un cristal ti:Sa vs temperature

FIG.1d

FIG.2a

FIG.2b

FIG.2c

FIG.3a

FIG.3b

FIG.3c

FIG.4a

FIG.4b

FIG.5a

FIG.5b

FIG.5c

**EP 1 999 826 B1**

**RÉFÉRENCES CITÉES DANS LA DESCRIPTION**

**Documents brevets cités dans la description**

- WO 2006031254 A